# EUROPÄISCHE PATENTSCHRIFT

(11) **EP 2 612 098 B1**
(45) Veröffentlichungstag und Bekanntmachung des Hinweises auf die Patenterteilung: **01.07.2015**
(21) Anmeldenummer: 11764074.8
(22) Anmeldetag: 05.09.2011
(51) Int. Cl.: F28D 13/00, F28D 20/00

(54) **WÄRMESPEICHERSYSTEM**
HEAT STORAGE SYSTEM
SYSTÈME ACCUMULATEUR DE CHALEUR

(30) Priorität: 03.09.2010 AT 14772010
(43) Veröffentlichungstag der Anmeldung: 10.07.2013
(73) Patentinhaber: Technische Universität Wien, 1040 Wien (AT)
(72) Erfinder: HAIDER, Markus, A-1030 Wien (AT); EISL, Roland, A-1090 Wien (AT); HOLZLEITHNER, Franz, A-1020 Wien (AT)
(74) Vertreter: Ellmeyer, Wolfgang
(86) Internationale Anmeldenummer: PCT/AT2011/000362
(87) Internationale Veröffentlichungsnummer: WO 2012/027769

(56) Entgegenhaltungen:
- DE-A1- 2 925 649
- DE-B- 1 015 775
- DE-C- 900 578
- DE-C2- 10 149 806
- JP-A- 2006 078 069

## Beschreibung

Die vorliegende Erfindung betrifft ein Wärmespeichersystem unter Verwendung von Sand als festes Wärmespeichermedium.

### STAND DER TECHNIK

Die Verwendung von Sand als Wärmeträger bzw. -speicher ist grundsätzlich bekannt. Beispielsweise offenbart die US 4.338.919 A ein Sonnenkollektorensystem, in dem ein teilchenförmiges Energiekollektormedium wie etwa Sand, durch einen Sonnenkollektor rieselt und dabei Wärmeenergie aufnimmt. Diese wird in einem Fließbettwärmeaustauscher an ein gasförmiges (z.B. Luft) oder flüssiges Medium (z.B. Wasser) abgegeben, wonach der Feststoff erneut durch den Sonnenkollektor geführt wird.

Demgegenüber sieht die DE 101 49 806 C2 formal ein zusätzliches Wärmeüberträgermedium zwischen dem Sonnenkollektor und dem Sand sowie ein Sandspeichersystem vor. Konkret offenbart dieses Dokument ein Solarturmkraftwerk, in dem ein Spiegel-Heliostatfeld Sonnenlicht auf einen Strahlungsreceiver fokussiert und diesen so erhitzt. Der an der Turmspitze gelegene Strahlungsreceiver wird von Luft durchströmt, die dabei Wärme aufnimmt, anschließend in einem darunter liegenden Wärmeaustauscher im Gegenstrom mit hindurchrieselndem Sand in Kontakt kommt und dabei die Wärme auf den Sand überträgt. Dieser, z.B. 800 °C heiße, Sand wird in einem wiederum darunter angeordneten Heißspeicher aufbewahrt, um bei Bedarf die Wärme wieder abzugeben. Zu diesem Zweck wird der Sand durch einen Fließbettkühler geleitet, worin er die Wärme auf ein in Wärmetauscherschlangen geführtes, flüssiges oder gasförmiges Medium abgibt. Anschließend wird der, z.B. 150 °C heiße, Sand in einen außerhalb des Turm gelegenen Kaltspeicher geleitet, von wo er bei Bedarf erneut in den Turm hochgeleitet werden kann.

Der Nachteil dieser Ausführungsformen liegt vor allem darin, dass große Mengen an Sand zwischen den Orten der Wärmeaufnahme und der Wärmeabgabe bzw. zwischen den beiden Sandspeichern beträchtliche Wegstrecken zurücklegen müssen.

Der Transport erfolgt durch Sandleitungen, die beispielsweise ein pneumatisches Fördersystem enthalten, was einen nicht geringen Anteil der gewonnenen Energie gleich vor Ort verbraucht und so den Wirkungsgrad der jeweiligen Solarkraftanlage mitunter deutlich verringert.

Darüber hinaus ist gerade bei Solarkraftanlagen, insbesondere bei Parabolrinnen, die Gegenwart von Sand aus mehreren Gründen problematisch. Erstens kann Sand zu Korrosion und Abrieb verschiedener Bauteile führen, zweitens die Spiegel verunreinigen und drittens zu Blockaden von mechanischen Verbindungen führen, z.B. von jenen zum Verstellen der Spiegel, aber auch jenen für den Sandtransport selbst (vgl. hierzu etwa US 2008/0127967 A1, DE 101 60 577 A1 und US 2010/0058703 A1, wo diese Problematik angesprochen wird).

Ziel der Erfindung war daher ein verbessertes Sand-Wärmespeichersystem, das mit geringerem Energieaufwand betrieben werden kann und keine Probleme bezüglich Korrosion oder Verunreinigung mit Sand bereitet.

### OFFENBARUNG DER ERFINDUNG

Die Erfindung erreicht dieses Ziel in einem ersten Aspekt durch Bereitstellung eines Wärmespeichersystems unter Verwendung von Sand als festes Wärmespeichermedium, dadurch gekennzeichnet, dass das System folgende Komponenten umfasst:
- einen Speicherbehälter für kalten Sand;
- einen Speicherbehälter für heißen Sand;
- einen dazwischen angeordneten Wirbelschicht-Wärmeaustauscher, der durch Wehre von den Speicherbehältern getrennt ist und durch Wehre in eine Vielzahl von Kammern unterteilt ist,
   wobei die Wehre als Kombination aus Überlauf- und Unterlaufwehren ausgebildet sind;
   wobei in den Kammern des Wärmeaustauschers Mittel zum Übertragen von Wärme von einer Wärmequelle auf den darin fluidisierten Sand sowie Mittel zum Übertragen von Wärme vom darin fluidisierten Sand auf ein Wärmetransportmedium vorgesehen sind; und
- zumindest ein unterhalb des Wärmeaustauschers angeordnetes Gebläse zur Fluidisierung des Sands.

Mittels eines solchen erfindungsgemäßen Wärmespeichersystems ist es möglich, Sand auf einfache und energiesparende Weise zwischen den beiden Speicherbehältern zu verlagern, die in unmittelbarer Nähe zueinander positioniert sind, d.h. lediglich durch den dazwischen liegenden Wirbelschicht-Wärmeaustauscher voneinander getrennt sind. Der Sand legt dabei nur geringe Distanzen zurück und kann innerhalb des Wärmeaustauschers ausschließlich mittels eines Fluidisierungsmediums transportiert werden, wodurch mechanische Bauteile im Wärmeaustauscher überflüssig werden. Die Steuerung der Mengenströme des Sandes aus den Speicherbehältern erfolgt jedoch vorzugsweise mittels geregelter mechanischer Fördereinrichtungen darin, zumal eine Fluidisierung auch der Speicherbehälter zwar gemäß vorliegender Erfindung ebenfalls möglich, aber nicht wirtschaftlich wäre. Die Kombination aus Über- und Unterlaufwehren stellt sicher, dass der über die mechanischen Fördereinrichtungen vorgegebene Feststoff-Massenstrom effizient durch den Wirbelschicht-Wärmeaustauscher geleitet wird. Durch das Vorsehen mehrerer Kammern des Wirbelschicht-Wärmeaustauschers kann in den jeweiligen Kammern ein gezielter Wärmeaustausch zwischen dem Sand und den Wärmeübertragungsmitteln erfolgen, wodurch ein höherer Wirkungsgrad der Wärmeübertragung erzielbar ist.

Weiters kann der Raumbedarf für ein solches Wärmespeichersystem gegenüber dem Stand der Technik deutlich verringert werden, da keine unterschiedlichen Leitungen für den Sandtransport von einem Speicherbehälter in den anderen und wieder zurück vonnöten sind, sondern der Transport in beiden Fällen durch den Wirbelschicht-Wärmeaustauscher hindurch erfolgt, wobei zusätzlich in beide Richtungen Wärmeenergie aus dem Sand gewonnen werden kann. Außerdem sind keine gesonderten Leitungen zum Hindurchleiten eines als Wärmequelle dienenden heißen Fluids und eines als Wärmetransportmedium dienenden kalten Fluids durch den Wirbelschicht-Wärmeaustauscher erforderlich, da in bevorzugten Ausführungsformen zwischen unterschiedlichen Fluids umgeschaltet werden kann, die durch dieselben Leitungen geführt werden.

Darüber hinaus ist ein erfindungsgemäßes Wärmespeichersystem als geschlossenes System ausführbar, so dass es zu keinerlei Problemen mit Korrosion, Abrieb oder Verschmutzung von Anlagen, wie z.B. Solarenergie- oder Industrieanlagen, kommt, die mit dem Wärmespeichersystem der Erfindung kombinierbar sind.

Die Art dieser Anlagen ist nicht speziell eingeschränkt, und es kommen sämtliche Anlagen in Frage, bei denen große Wärmemengen anfallen, die bis zu ihrer Nutzung (z.B. zur Stromerzeugung) zwischengespeichert werden sollen. Dazu zählen beispielsweise Kraftwerke, etwa Kraftwerke zur Erzeugung von Alternativenergie, Industriebetriebe, die große Mengen an Abwärme (z.B. in Abgasen) produzieren, aber auch Speicheranlagen für elektrische Energie, bei denen Strom in Form von Abwärme verloren geht, die mittels des erfindungsgemäßen Wärmespeichersystems zumindest teilweise rückgewonnen und gespeichert werden kann. Besonders gut geeignet ist die vorliegende Erfindung freilich für Solarkraftwerke, da die dort entstehenden und eingangs beschriebenen Probleme mit Sand durch die Erfindung praktisch vollständig lösbar sind und eine flexiblere Bereitstellung der gewonnenen Energie ermöglicht wird (etwa durch Stromerzeugung auch in der Nacht). Die Erfindung betrifft daher in einem zweiten Aspekt die Verwendung des erfindungsgemäßen Wärmespeichersystems zur Speicherung von in solchen Anlagen erzeugter Wärme.

In bevorzugten Ausführungsformen des Wärmespeichersystems gemäß dem ersten Aspekt der Erfindung sind die Wehre zwischen den einzelnen Kammern des Wirbelschicht-Wärmeaustauschers und zwischen dem Wärmeaustauscher und den beiden Speicherbehältern zumindest teilweise und unabhängig voneinander höhenverstellbar. Auf diese Weise kann beispielsweise ein bestimmtes Wehr beim Transport des Sands in eine Richtung als Überlaufwehr, beim Rücktransport jedoch als Unterlaufwehr dienen oder umgekehrt. Zudem braucht der Sand nicht über ein zwischen dem Wärmeaustauscher und einem Speicherbehälter liegendes Wehr (durch Fluidisierung oder mechanisch) angehoben werden, sondern kann nach Anheben des Wehrs einfach darunter hinweg in die nächste Kammer des Wärmeaustauschers oder den Speicherbehälter rieseln. Durch die Höhenverstellbarkeit einzelner oder aller Wehre wird somit der Transport des Sands vereinfacht, was die dafür erforderliche Energie weiter senkt.

Aufgrund des Vorliegens von Wirbelschichten in den Kammern des Wärmeaustauschers sind seitliche Führungsschienen für die höhenverstellbaren Wehre ebenso wenig erforderlich wie Dichtungen an ihrem unteren Ende, da die Wehre einfach in die Wirbelschicht abgesenkt werden können. Dennoch ist es natürlich möglich, solche Schienen, Dichtungen oder ähnliche Bauteile daran vorzusehen.

Die Höhenverstellbarkeit der Wehre ermöglicht darüber hinaus eine Steuerung der Höhe des Sandbetts in den jeweiligen Kammern bzw. der Füllhöhe in den Speicherbehältern, wodurch auch der Wärmeinhalt im gesamten Wärmespeichersystem und im Speziellen im Wärmeaustauscher steuerbar ist. Darüber hinaus ist durch die Kombination aus der Höhe der Wehre und der Stärke des in die jeweiligen Kammern eingeleiteten Fluidisierungsstroms die Verweilzeit des Sandes in den Kammern steuerbar.

Bei Unterlaufwehren erfolgt hingegen aufgrund des auf den Wirbelschichtpartikeln lastenden Drucks unmittelbar eine Weitergabe des Sandes unter dem Wehr hindurch in die nächste Kammer des Wärmeaustauschers, was beispielsweise eingestellt werden kann, wenn besonders kurze Verweilzeiten erwünscht sind, z.B. wenn die Energie rasch aus dem Wärmespeicher gewonnen werden soll.

Die Art und Weise, wie die Wehre in ihrer Höhe verstellbar sind, ist nicht speziell eingeschränkt, und es kommen beliebige Arten von mechanischen, hydraulischen und pneumatischen Hebevorrichtungen infrage, wie z.B. Ketten- oder Seilzüge, Hebeplattformen usw. Aus Kostengründen werden Ketten- oder Seilzüge aus hochtemperaturbeständigen Stählen bevorzugt.

Das zumindest eine Gebläse zur Fluidisierung des Sands kann vorzugsweise gleichzeitig als Mittel zum Übertragen von Wärme auf den Sand dienen, indem heiße Luft als Fluidisierungsmedium eingeblasen wird, die auch als Wärmequelle fungiert. Auf diese Weise kann bereits während des Erhitzens des Sandes, der anschließend in den Speicherbehälter für heißen Sand geleitet wird, ein Teil der mit der heißen Luft zugeführten Wärme im Wirbelschicht-Wärmeaustauscher auf das Wärmetransportmedium übertragen und sofort gewonnen werden. Als heiße Luft kann beispielsweise die in einem Solarturmkraftwerk nach dem Stand der Technik (z.B. DE 101 49 806 C2) erhitzte Luft eingesetzt werden. Andererseits kann zu diesem Zweck aber auch beispielsweise ein heißes Abgas aus einem industriellen Prozess als Wärmequelle, genutzt werden, das mitunter bereits einen gewissen Überdruck aufweist.

Alternativ oder zusätzlich dazu können als Mittel zum Übertragen von Wärme auf den Sand vorzugsweise eine oder mehrere Leitungen zum Hindurchleiten eines für den Sand als unmittelbare Wärmequelle dienenden heißen Fluids durch den Wärmeaustauscher dienen, wobei noch bevorzugter Bündel solcher Leitungen eingesetzt werden, um eine möglichst große Oberfläche für den Wärmeübergang zur Verfügung zu stellen. In diesen Leitungen kann beispielsweise ein gasförmiges oder flüssiges Medium geführt werden, das bei Parabolrinnen-Solarkraftwerken zum Einsatz kommt, wie sie beispielsweise in den bereits zuvor erwähnten US-Anmeldungen 2008/0127967 A1 und 2010/0058703 A1 beschrieben werden.

In ähnlicher Weise sind die Mittel zum Übertragen von Wärme vom Sand auf ein Wärmetransportmedium vorzugsweise eine oder mehrere Leitungen zum Hindurchleiten eines als Wärmetransportmedium dienenden "kalten Fluids" durch den Wärmeaustauscher, noch bevorzugter wiederum Bündel solcher Leitungen.

Weder das heiße noch das kalte Fluid sind speziell eingeschränkt, so dass alle fließfähigen flüssigen und gasförmigen Medien sowie Gemische davon infrage kommen, die in der Lage sind, Wärme aufzunehmen und abzugeben. Beispielsweise kann direkt Wasser oder eine andere Flüssigkeit eingesetzt werden, die bei der Wärmeaufnahme verdampft und in Dampfform durch die Leitungen geführt wird. Insbesondere bei Verwendung als (anfänglich) kaltes Fluid kann die durch Kontakt mit dem heißen Sand erhitzte und verdampfte Flüssigkeit anschließend direkt zum Betrieb von Dampfturbinen eingesetzt werden.

Wiewohl natürlich sowohl das heiße als auch das kalte Fluid Wärmetransportmedien darstellen, wird hierin der Übersicht halber das heiße Fluid als "Wärmequelle" für den Sand bezeichnet, während das kalte Fluid "Wärmetransportmedium" genannt wird, das bei Bedarf aus dem Wärmespeichersystem Wärme abzieht, die in der Folge in nutzbare Energie, wie z.B. elektrischen Strom, umgewandelt wird. Tatsächlich ist die eigentliche Wärmequelle beispielsweise ein Kraftwerk, ein Industriebetrieb usw., in dem ein Fluid erhitzt wird, das danach als nun "heißes Fluid" die unmittelbare Wärmequelle für den Sand darstellt. Kollektiv werden beide Fluids nachstehend als "Wärmeübertragungsmedien" bezeichnet.

In den beiden Sandspeicherbehältern sind vorzugsweise Mittel zum Austragen von Sand daraus vorgesehen, um Sand auch aus unteren Bereichen der Speicherbehälter in den Wirbelschicht-Wärmeaustauscher befördern zu können. Diese Mittel zum Austragen von Sand sind vorzugsweise aus Schnecken-, Band- und Becherförderern sowie Fluidisierungsgebläsen ausgewählt. Davon werden mechanische Fördereinrichtungen noch mehr bevorzugt, um den Energieverbrauch des Systems niedrig zu halten. Für verschiedene Anwendungen können jedoch - anstelle dessen oder zusätzlich dazu - auch andere Fördermittel zum Einsatz kommen. Das jeweilige Mittel der Wahl hängt dabei sowohl vom Anwendungszweck als auch von der Konstruktionsweise des erfindungsgemäßen Wärmespeichersystems ab. Im Allgemeinen wird aber ein herkömmliches mechanisches Fördermittel zu bevorzugen sein. Um den Wirkungsgrad des erfindungsgemäßen Wärmespeichersystems zu maximieren, ist ein Fördermittel mit minimalem Energieaufwand zu bevorzugen.

In bevorzugten Ausführungsformen ist im erfindungsgemäßen Wärmespeichersystem als zusätzliche Komponente ein System zur Wärmerückgewinnung aus dem Fluidisierungsmedium vorgesehen, was die Energieausbeute des Systems weiter steigert. Dieses System kann beispielsweise einen oder mehrere oberhalb des Wirbelschicht-Wärmeaustauschers angeordnete rekuperative Gas-Wärmeaustauscher umfassen. Auch kann das Fluidisierungsmedium aus mehreren Kammern mit ähnlichem Temperaturniveau gebündelt und einem gemeinsamen rekuperativen Gas-wärmeaustauscher zugeführt werden, um eine wirtschaftliche Bauweise zu ermöglichen und Wärme aus dem Fluidisierungsmedium auf möglichst hohem exergetischem Niveau zurückzugewinnen.

Gemäß einer weiteren bevorzugten Ausführungsform der Erfindung werden Wärmeverluste durch das Fluidisierungsmedium dadurch minimiert, dass oberhalb des Wirbelschicht-Wärmeaustauschers Mittel zum Auffangen und Rezyklieren des Fluidisierungsmediums vorgesehen sind. So kann heißes Fluidisierungsmedium - gegebenenfalls zusammen mit frischem, erstmalig zugeleitetem Medium - wiederholt in den Wirbelschicht-Wärmeaustauscher eingeleitet werden, um einen möglichst hohen Anteil der darin enthaltenen Wärmemenge auf den Sand zu übertragen. Die Rezirkulation kann beispielsweise mittels eines oder mehrerer heiß laufender Fluidisierungsgebläse realisiert werden.

In weiteren, besonders bevorzugten Aüsführungsformen sind in einer oder mehreren Kammern des Wärmeaustauschers der Erfindung Mittel zum Umlenken des Sandes in horizontaler Richtung vorgesehen. Diese steuern die Bewegung der Sand-Wirbelschicht durch die jeweilige Kammer und können beispielsweise den Sand bevorzugt zu einer Seite der Kammer hin drängen und/oder bewirken, dass sich der Sand in Schlangenlinien oder mäandernd durch die Kammer bewegt. Auf diese Weise kann einerseits die Verweilzeit des Sandes in der Kammer gesteuert werden und andererseits seine Bewegungsrichtung an den Verlauf der Leitungen zur Wärmeübertragung durch die jeweilige Kammer angepasst werden. Zu letzterem Zweck werden die Umlenkmittel vorzugsweise so gewählt und angeordnet, dass sich in der Kammer ein Gegenstrom zwischen dem Sand und dem in den Leitungen geführten Medium ergibt, worduch der Wärmeaustausch noch weiter verbessert wird. Zusätzlich oder auch alternativ dazu kann der Verlauf der Leitungen so gewählt werden, dass er optimal an die Bewegungsrichtung des Sandes durch die Kammer(n) angepasst ist, um den Gegenstrom zwischen Sand und dem in den Leitungen geführten Medium zu erzeugen.

Die Umlenkmittel sind dabei nicht speziell eingeschränkt und können beispielsweise ein oder mehrere horizontal wirkende Gebläse und/oder Einbauten in der Kammer sein, die von der Seite in die jeweilige Kammer hineinragen. Zur Optimierung des Wirkungsgrads des Wärmespeichersystems der Erfindung sind die Umlenkmittel vorzugsweise ein oder mehrere Einbauten, die sozusagen als "Schikanen" in dem vom Sand innerhalb der Kammer zurückgelegten Weg fungieren. Die Art, Anzahl und Position der Umlenkmittel sind nicht speziell eingeschränkt.

Unter "Sand" ist hierin im weitesten Sinne jedes feste, temperaturbeständige, abriebfeste, unreaktive, granulare Material zu verstehen, das, bei gegebener Korngrößenverteilung, eine Korngröße von etwa 0,03 bis 2 mm aufweist. Die Definition umfasst somit nicht nur mineralische klastische Sedimente, wie z.B. Quarzsande und Industriesande, sondern beispielsweise auch granulierte Schlacke aus dem (Eisen-)Hüttenwesen oder aus thermischen Kraftwerksprozessen, Olivin und dergleichen. Die Korngröße und deren Verteilung bestimmen die Fluidisierungseigenschaften des Sandes sowie die Wärmeübergangseigenschaften maßgeblich, so dass der Auswahl des geeigneten Sandes essentielle Bedeutung zukommt. Aufgrund der geografischen Lage moderner Solarkraftwerke wird für diesen speziellen Anwendungsbereich natürlicher Seesand oder Dünensand, nach entsprechender Reinigung bzw. Sichtung, mitunter zu bevorzugen sein.

Die Materialien für die Komponenten des erfindungsgemäßen Wärmespeichersystems, vor allem für die Speicherbehälter, die Wände des Wärmeaustauschers und die Wehre sowie die optionalen Einbauten in den Kammern, sind nicht speziell eingeschränkt, solange Temperaturbeständigkeit, chemische Inertheit, Abriebfestigkeit und Korrosionsbeständigkeit gewährleistet sind. Bevorzugt werden, je nach Bauteil, Beton sowie hochtemperaturbeständige Edel- und Spezialstähle. Für höhenverstellbare Wehre ist beispielsweise, gegebenenfalls bewehrter, Leichtbeton das Material der Wahl.

Die Fluidisierung des Sandes im Wirbelschicht-Wärmeaustauscher kann prinzipiell mit jedem beliebigen Fluidisierungsmedium erfolgen, das bei den herrschenden Temperaturen keine Zersetzung erfährt und chemisch entsprechend inert ist. Gemäß vorliegender Erfindung wird vorzugsweise ein Gas oder Gasgemisch, noch bevorzugter Luft oder ein Rauchgas oder Abgas, eingesetzt.

### KURZBESCHREIBUNG DER ZEICHNUNGEN

Fig. 1 zeigt eine schematische Seitenansicht einer bevorzugten Ausführungsform des Wärmespeichersystems der Erfindung;
Fig. 2 zeigt eine schematische Draufsicht auf die Ausführungsform des Wärmespeichersystems der Erfindung aus Fig. 1;
die Fig. 3a bis 3c zeigen jeweils eine schematische Draufsicht auf eine Ausführungsform des Wärmespeichersystems der Erfindung mit Einbauten als Umlenkmittel;
die Fig. 4a bis 4e zeigen schematisch verschiedene Ausführungsformen eines Wärmespeichersystems der Erfindung mit einem System zur Wärmerückgewinnung; und
Fig. 5 illustriert anhand eines schematischen Schaltbilds die möglichen Betriebsmodi eines Wärmespeichersystems der Erfindung in Kombination mit einer Wärme erzeugenden Anlage.

### DETAILLIERTE BESCHREIBUNG DER ERFINDUNG

In den Figuren sind bevorzugte Ausführungsformen des Wärmespeichersystems der vorliegenden Erfindung mit höhenverstellbaren Wehren schematisch dargestellt. diese Ausführungsformen sind freilich nicht als Einschränkung zu verstehen, sondern sollen die Erfindung lediglich illustrieren.

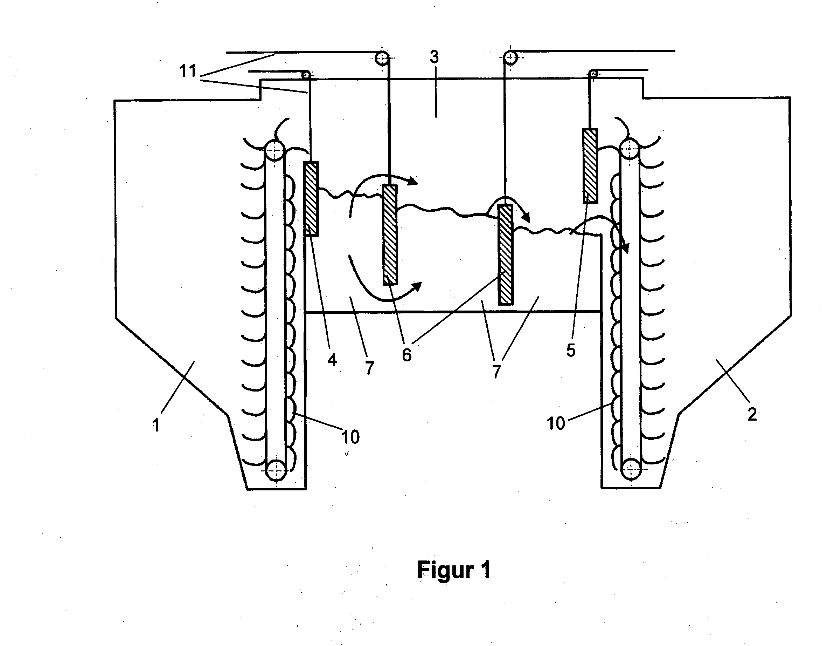

In Fig. 1 kennzeichnet Bezugszeichen 1 einen Speicherbehälter für kalten Sand, 2 einen Speicherbehälter für heißen Sand, 3 den Wirbelschicht-Wärmeaustauscher der in drei Kammern 7 unterteilt ist. Die Unterteilung erfolgt mittels zweier Wehre 6 und die Abgrenzung zu den Speicherbehältern 1 und 2 mittels zweier Wehre 4 und 5. Sämtliche Wehre sind mittels Ketten- oder Seilzügen 11 höhenverstellbar ausgeführt, und beide Speicherbehälter umfassen jeweils einen Schaufel- oder Becherförderer 10 zur Abgabe des darin gespeicherten Sandes. Der Wirbelschicht-Wärmeaustauscher 3 ist mittels eines (nicht dargestellten) Gebläses fluidisiert, das ein Fluidisierungsmedium von unten in den Wärmeaustauscher 3 einbläst, um in den Kammern 7 Wirbelschichten zu erzeugen, deren Durchschnittshöhe durch Wellenlinien dargestellt ist.

Bei Betrieb des Wärmespeichersystems im "Beladungs"-Betriebszustand, d.h. zur Beladung des Sandes mit Wärme, also mit relativ vollem Kaltsandspeicher 1 und relativ leerem Heißsandspeicher 2, wird aus dem Speicherbehälter 1 kalter Sand mithilfe eines Fördermittels 10, in Fig. 1 als Becher- oder Schaufelförderer dargestellt, in den Wirbelschicht-Wärmeaustauscher 3 befördert. In der Folge wird durch die unterschiedliche Wahl der Höhe der Wehre zum Speicherbehälter 2 für heißen Sand hin ein Gefälle erzeugt. Das Wehr 5, das Speicherbehälter 2 vom Wärmeaustauscher 3 trennt, ist zu diesem Zweck ganz hochgezogen, damit der Sand aus der dritten (in der Figur: rechten) Kammer 7 des Wärmeaustauschers 3 unterhalb des Wehrs 5 in den Speicherbehälter 2 übertreten kann. Die beiden Wehre 6, die die drei Kammern 7 des Wärmeaustauschers 3 voneinander trennen, sind in einer mittleren Position bzw. einer unteren Position dargestellt, und die Wanderung des Sandes ist durch Pfeile angedeutet.

Das linke der beiden Wehre 6 ist in einer intermediären Position dargestellt, aus der es sowohl in die Position eines Überlauf- als auch in jene eines Unterlaufwehres gebracht werden kann. Wird eine kurze Verweilzeit des Sandes in der ersten (d.h. linken) Kammer 7 gewünscht, wird das Wehr in dieser Position belassen oder sogar noch etwas angehoben damit der Sand unterhalb des Wehres in die nächste (d.h. mittlere) Kammer übertreten und - bei Annahme etwa gleich starker Fluidisierung der beiden Kammern - für einen Füllstandsausgleich sorgen kann. Soll der Sand längere Zeit über in der linken Kammer verweilen, um mit Wärme beladen zu werden, wird das linke der Wehre 6 bis zum Boden des Wärmeaustauschers 3 abgesenkt, so dass der Sand die linke Kammer erst verlassen kann, wenn der Fluidisierungsstrom verstärkt wird und die Wirbelschicht in eine schnell fluidisierte, Feststoff austragende Wirbelschicht übergeht. Ähnliches gilt für das rechte der Wehre 6.

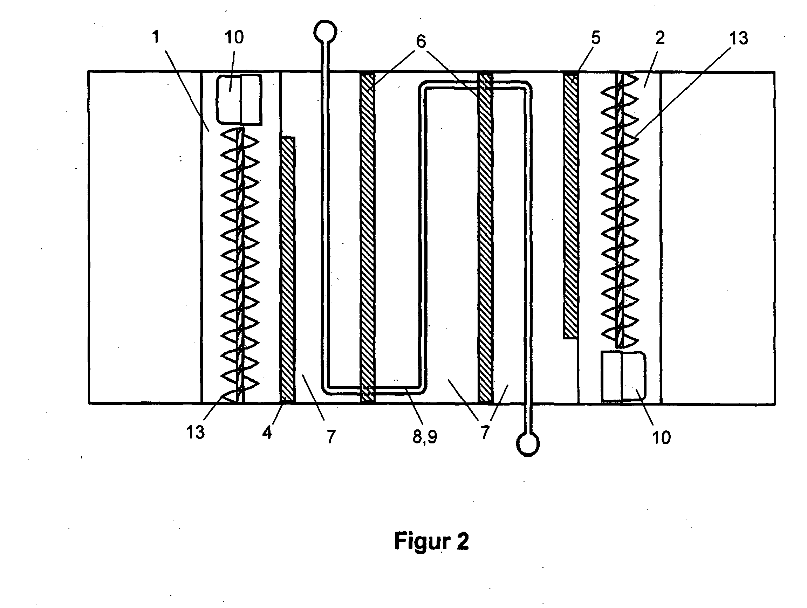

Die Beladung des Sandes mit Wärme kann, wie bereits erwähnt, beispielsweise erfolgen, indem ein heißes Fluid, z.B. Heißluft, als Fluidisierungsmedium eingesetzt wird oder indem ein heißes Fluid durch Wärmeaustauscher-Leitungen geführt wird, die vom fluidisierten Sand umflossen werden, oder auch durch eine Kombination davon. Solche Leitungen sind in Fig. 2 mit dem Bezugszeichen "8,9" bezeichnet. Dies bedeutet, dass die Leitung während des Beladens des Sandes mit Wärme als Mittel 8 zum Übertragen von Wärme auf den in der jeweiligen Kammer fluidisierten Sand dient, während sie beim "Entladen" des Sandes, also bei der Wärmeabgabe, als Mittel 9 zum Übertragen von Wärme vom Sand auf ein in der Leitung geführtes Wärmetransportmedium dient. Dies stellt einen wesentlichen Vorteil der Erfindung dar, da in ein und demselben Wärmeaustauscher sowohl der Belade- als auch der Entladevorgang erfolgen können, indem einfach unterschiedliche Fluids durch die Leitungen 8,9 geführt werden, zwischen denen je nach Betriebsmodus umgeschaltet werden kann.

Fig. 2 ist eine schematische Draufsicht auf die Ausführungsform aus Fig. 1, in der gleiche Bauteile mit gleichen Bezugszeichen gekennzeichnet sind. Zusätzlich sind in den beiden Sandspeicherbehältern 1 und 2 zwei Schneckenförderer 13 dargestellt, mittels derer der Sand in horizontaler Richtung zum jeweiligen Schaufel- oder Becherförderer 10 hin transportiert werden kann. Die Becherförderer 10 sind zu diesem Zweck jeweils am seitlichen Rand der Speicherbehälter angeordnet, um Letztere im entsprechenden Betriebsmodus möglichst vollständig leeren zu können. Aufgrund der Fluidisierung des Wirbelschicht-Wärmeaustauschers 3 spielt die Position der Förderer 10 in horizontaler Richtung zwar prinzipiell nur eine untergeordnete Rolle, da sich der Füllstand in der jeweiligen Kammer des Wärmeaustauschers ohnehin von selbst nivelliert. Wird allerdings eine erfindungsgemäß bevorzugte Gegenstrom-Führung des Sandes zum Medium in den Leitungen 8,9 des Wärmetauschers angestrebt, sind die Förderer 10 vorzugsweise am Beginn bzw. Ende der Sandströmung, z.B. an der seitlichen Rändern der ersten und letzten Kammer 7, angeordnet, wie dies in Fig. 2 auch dargestellt ist. Wie in dieser Zeichnung ebenfalls zu erkennen, erstrecken sich die Wehre 4 und 5 zu diesem Zweck nicht über die gesamte Breite des Wärmeaustauschers 3.

Bei Vorsehen einer pneumatischen Förderung innerhalb der Speicherbehälter 1 und 2 könnten zwar beide Förderer 10 und 13 entfallen. Aufgrund des hohen Energieaufwands zur Fluidisierung der großen Sandmengen in den Speicherbehältern ist eine Fluidisierung derselben jedoch nur in Ausnahmefällen bevorzugt.

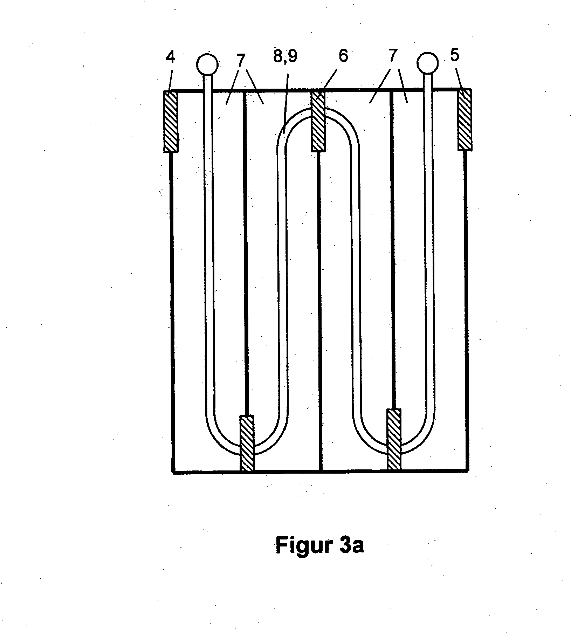

Die Leitung 8,9 ist in Fig. 2 - wie auch in den Fig. 3a-c - zwar aus Gründen der Übersichtlichkeit als einzelne Leitung dargestellt, es versteht sich jedoch, dass in der Praxis ein Leitungsbündel zum Einsatz kommen wird, um den Wärmeübergang zu verbessern. Der Übergang der Leitungen 8,9 von einer Kammer 7 in die nächste erfolgt im dargestellten Fall unterhalb der Wehre 6, wie dies durch die Strichlierung in diesem Bereich angedeutet ist. Alternativ oder zusätzlich dazu können die Leitungen jedoch auch außerhalb des Wirbelschicht-Wärmeaustauschers 3 um die Wehre 6 herumgeführt werden. Die Option der Leitungsführung oberhalb der Wehre 6 ist aufgrund der Höhenverstellbarkeit der Letzteren hingegen kaum praktikabel.

Im zweiten Betriebsmodus, d.h. beim "Entladen" des Sandes, also der Abgabe der Wärme auf ein Wärmetransportmedium, wird die in Fig. 1 dargestellte Konfiguration des erfindungsgemäßen Wärmespeichersystems umgekehrt, d.h. das Wehr 5 befindet sich in der für Wehr 4 gezeigten Höhe und umgekehrt, und die Wehre 6 werden der gewünschten Verweilzeit entsprechend als Über- bzw. Unterlaufwehre angeordnet. Hat beim Beladen des Sandes mit Wärme als Wärmequelle bzw. Wärmeübertragungsmedium ein durch die Leitung 8,9 geleitetes Fluid gedient (gegebenenfalls zusätzlich zu heißer Luft als Fluidisierungsmedium), braucht beim Entladen einfach die Speisung der Leitung 8,9 umgeschaltet zu werden, so dass diese nun von einem Wärmetransportmedium durchströmt wird, die vom heißen Sand Wärme aufnimmt.

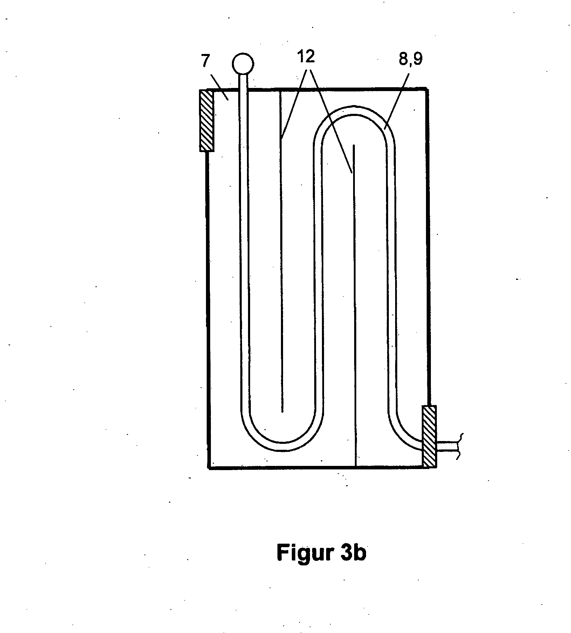

In den Fig. 3a und 3b sind Ausführungsformen von Fluidisierungskammern des Wir-belschichtwärmetauschers zur Erreichung eines Gegenstromverhaltens innerhalb dieser Kammern 7 dargestellt. In der Ausführungsform aus Fig 3a wird durch fünf hö-henverstellbare Wehre 4, 5, 6 dem Sand nur erlaubt, über die Wehre hinweg bzw. unter den Wehren hindurch zu strömen, wobei die Wehre vorzugsweise abwechselnd als Über- und Unterlaufwehre geschaltet sind. Dadurch wird eine Strömung des Sandes im Gegenstrom zum heißen oder kalten Fluid innnerhalb der Leitungen 8,9 des Rohrbündels des Wärmetauschers erzwungen und aufgrund dieser Charakteristik eines Gegenstromwärmetauschers eine sehr effiziente Wärmeübertragung erreicht.

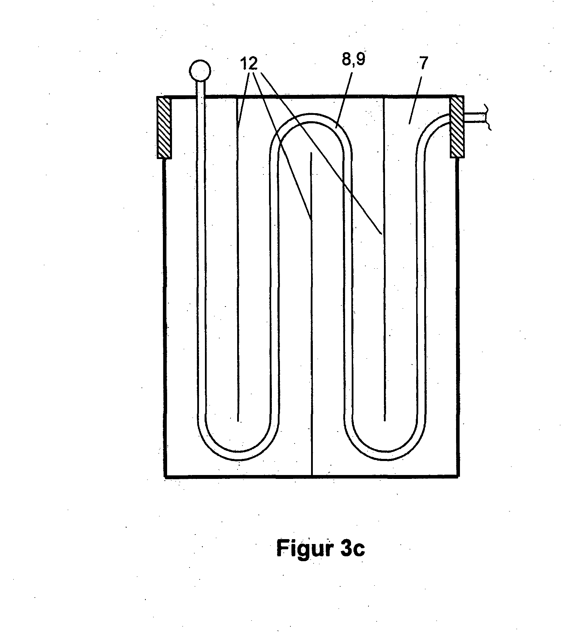

In den Fig. 3b und 3c wird die Gegenströmung des Sandes zum heißen oder kalten Fluid in den Leitungen 8,9 innerhalb einer Kammer 7 dadurch erreicht, dass fixe Ein-bauten 12, sozusagen als "Schikanen" zwischen den Leitungen angeordnet sind. Die Schikanen 12 ragen von jeweils einer Seite in die Kammer 7 hinein, schließen mit dem Boden der Kammer ab und sind höher als die Betthöhe des fluidisierten Sandes. Auf diese Weise versperren sie einen Teil, vorzugsweise zumindest drei Viertel, der Breite der jeweiligen Kammer 7. Dem Sand ist es somit nur möglich, durch offenen Anteil der Kammerbreite zwischen Kammerwand und Schikane zu fließen, was eine Gegenstromcharakteristik innerhalb der Kammer erzeugt. Die Anzahl und Form der Einbauten ist dabei variabel und nicht auf die hier dargestellten Ausführungsformen mit zwei (Fig. 3b) bzw. drei (Fig. 3c) Schikanen 12 beschränkt.

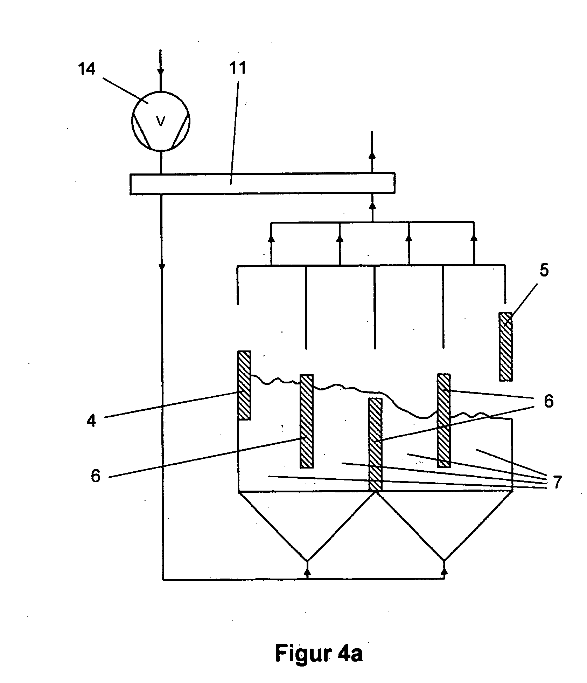

In den Fig. 4a bis 4e sind verschiedene beispielhafte Ausführungsformen eines Systems zur Wärmerückgewinnung aus dem Fluidisierungsmedium dargestellt. Das in Fig. 4a gezeigte System gewinnt die Wärme aus dem Fluidisierungsmedium mithilfe eines rekuperativen Gas-Wärmetauschers 11, der - in Strömungsrichtung des Fluidisierungsmediums gesehen - nach dem Fluidisierungsgebläse 14 sowie nach dem Wirbelschichtwärmetauscher, vorzugsweise oberhalb davon, angeordnet ist. Die im Gas-Wärmetauscher 11 aus dem Fluidisierungsmedium nach Passieren des Wärmetauschers (rück)gewonnene Wärme wird dann zumindest teilweise auf das Fluidisierungsmedium übertragen, nachdem es das Fluidisierungsgebläse 14 passiert hat und bevor es in den Wirbelschicht-Wärmetauscher eintritt. Die Ströme des aus den vier Kammern 7 des Wirbelschicht-Wärmetauschers austretenden Fluidisierungsmediums werden zu einem einzigen Strom zusammengefasst, der durch den Gas-Wärmetauscher 11 geführt wird. Dadurch kann ein kostengünstiges System zur Wärmerückgewinnung aus dem Fluidisierungsmedium realisiert werden. Die Anzahl an Kammern und Wehren ist dabei natürlich variabel.

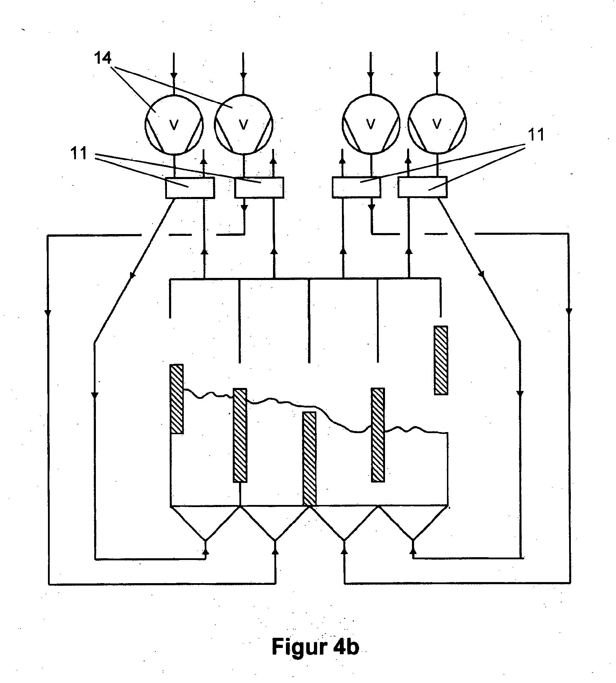

In Fig. 4b ist eine weitere Ausführungsform des Wärmerückgewinnungssystems aus dem Fluidisierungsmedium dargestellt. Dabei werden die Ströme aus dem Wirbelschicht-Wärmetauscher nicht zusammengefasst, sondern die Wärme jedes aus den Kammern austretenden Stroms des Fluidisierungsmediums wird mithilfe eines eigenen rekuperativen Gas-Wärmetauschers 11 aus jeden Strom getrennt (rück)gewonnen. Auch eine Kombination aus den in Fig. 4a und Fig. 4b gezeigten Ausführungsformen ist möglich, d.h. die Ströme des Fluidisierungsmediums aus den Kammern können gruppenweise zusammengefasst werden, um eine geringere Anzahl an Gas-Wärmetauschern 11 einsetzen zu müssen.

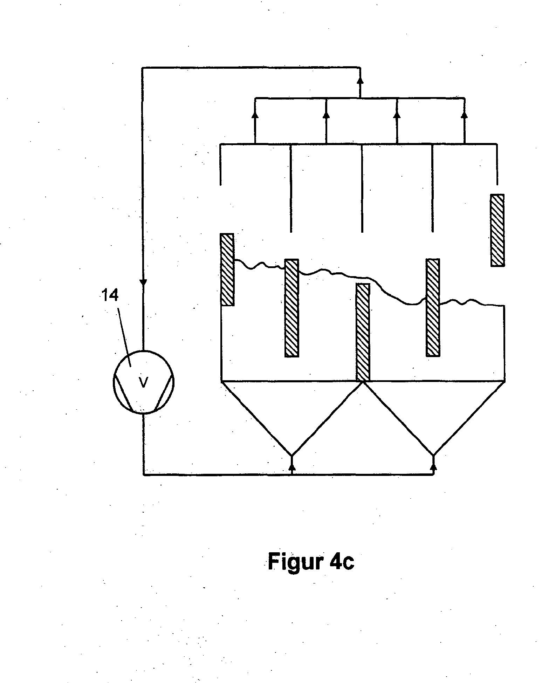

In Fig 4c ist ein System zur Wärmerückgewinnung aus dem Fluidisierungsmedium mittels Rezirkulation desselben unter Verwendung von Mitteln zum Auffangen und Rezirkulieren dargestellt. Die Ströme des Fluidisierungsmediums aus den Kammern des Wirbelschicht-Wärmetauschers werden dabei zu einem Strom zusammengefasst, der vom Fluidisierungsgebläse 14 angesaugt und verdichtet wird und wieder den Kammern des Wirbelschicht-Wärmetauschers zugeführt wird. Somit dient das Fluidisierungsgebläse 14 gleichzeitig als Rezirkulationsmittel.

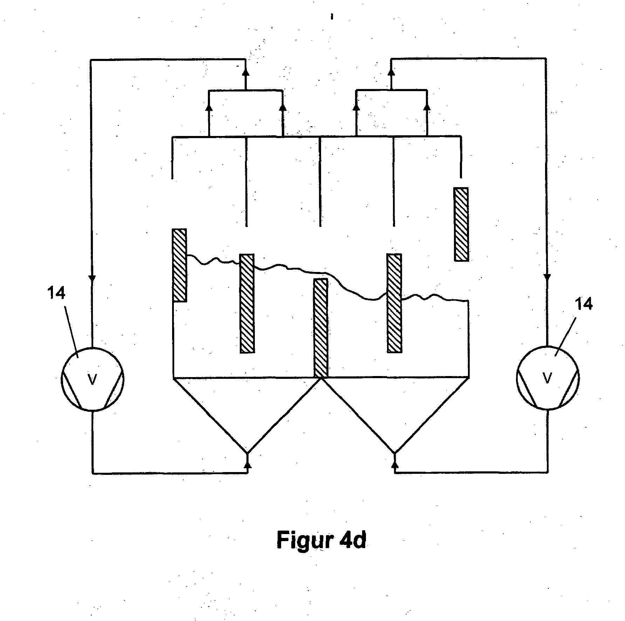

In Fig. 4d ist eine Ausführungsform dargestellt, bei der die aus den vier Kammern des Wirbelschicht-Wärmetauschers austretenden Ströme des Fluidisierungsmediums mittels zweier Fluidisierungsgebläse 14 paarweise zusammengefasst, verdichtet und wiederum in den Wirbelschicht-Wärmetauscher eingeleitet werden.

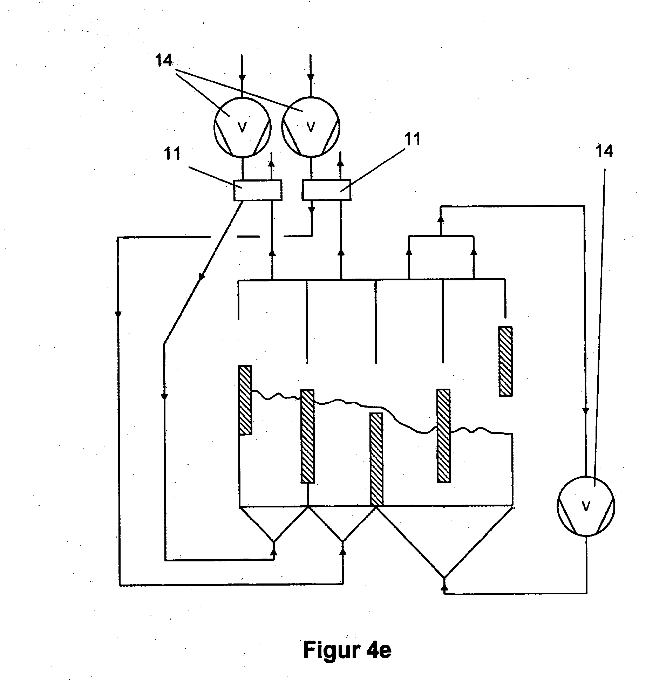

Als weiteres System zur Wärmerückgewinnung aus dem Fluidisierungsmedium wird eine Kombination mehrerer der obigen Varianten in Fig. 4e gezeigt. Die Wärme aus dem Fluidisierungsmedium der beiden linken Kammern des Wirbelschicht-Wärmetauschers wird dabei mithilfe zweier rekuperativer Gas-Wärmetauscher 11 (rück)gewonnen und auf frisches Fluidisierungsmedium übertragen. Die Wärme aus dem zu einem Strom zusammengefassten Fluidisierungsmedium aus den beiden rechten Kammern wird mittels Rezirkulation mithilfe des rechten Fluidisierungsgebläses 14 (rück)gewonnen.

Generell ist jedoch gemäß vorliegender Erfindung weder die Anzahl der zu einem einzigen Strom zusammengefassten Ströme noch jene der rezirkulierten Ströme des Fluidisierungsmediums nicht eingeschränkt. Das heißt, dass auch beliebige Kombinationen der obigen und auch weiterer, ähnlicher Ausführungsformen im Rahmen des Schutzumfangs der Erfindung liegen, solange dadurch die Wirtschaftlichkeit des erfindungsgemäßen Sandwärmespeichersystems bzw. dessen Wirkungsgrad erhöht werden kann.

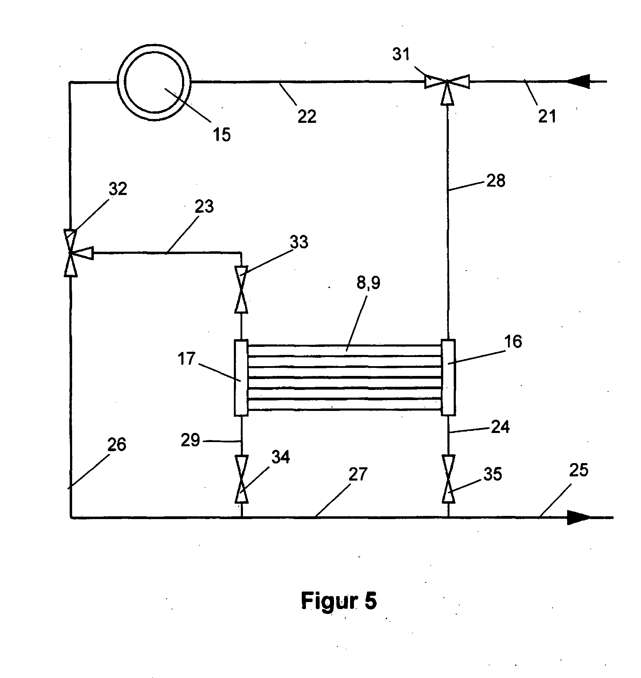

Ein erstes Beispiel für eine Verwendung eines erfindungsgemäßen Wärmespeichersystems in Kombination mit einer Energiegewinnungsanlage ist in Form eines schematischen Schaltbilds in Fig. 5 dargestellt. In dieser Figur bezeichnen die Bezugszeichen folgende Bestandteile:
- 15: eine äußere Wärmequelle, wie z.B. ein Kraftwerk, eine Industrieanlage, ein Stromspeicher oder dergleichen;
- 16,17: Verteiler bzw. Sammler zur Verbindung der entsprechenden Zu- und Ableitungen mit dem Leitungsbündel 8,9;
- 21-29: Leitungen zum Transport von Wärmeübertragungsfluids zum und vom erfindungsgemäßen Wärmespeichersystem;
- 31-35: Flussregler, wie z.B. Ventile, wobei 31-32 Dreiwegventile und 33-35 Sperrventile darstellen.

Das Leitungsbündel 8,9 verläuft durch ein (nicht dargestelltes) erfindungsgemäßes Wärmespeichersystem hindurch, um Wärme von dem darin fluidisierten Sand auf ein Wärmeübertragungsmedium abzugeben oder umgekehrt.

Im ersten Betriebsmodus des Wärmespeichersystems der Erfindung, d.h. der Beladung des Sands mit Wärme, wird ein Wärmeübertragungsmedium, das für den Sand als Wärmequelle dient, über Leitung 21, Ventil 31 und Leitung 22 zu der äußeren Wärmequelle 15, z.B. ein Solarkraftwerk, geleitet, wo es Wärme aufnimmt, also hoch erhitzt wird. Über Ventil 32, Leitung 23 und Ventil 33 gelangt das nun heiße Fluid in den Verteiler 17, der die Leitung 23 in ein Leitungsbündel 8.9 (in diesem Fall 8) aufspaltet, das den Wirbelschicht-Wärmeaustauscher des Wärmespeichersystems passiert und dort die Wärme zum größten Teil auf den darin enthaltenen Sand abgibt. Sperrventil 34 ist in diesem Fall geschlossen. Der Sammler 16 vereinigt das Leitungsbündel wiederum zu Leitung 24, durch die sowie über Ventil 35 und Leitung 25 das abgekühlte Fluid aus der Anlage (z.B. in einen Speicherbehälter) abgeleitet wird oder über Leitung 21 direkt wieder rezykliert wird.

Für den Fall, dass keine Wärme im Wärmespeichersystem gespeichert oder daraus entnommen werden soll, wird die Anlage aus Fig. 3 in einen "Bypass"-Modus geschaltet. In diesem Fall gelangt das Wärmeübertragungsmedium wiederum über Leitung 21, Ventil 31 und Leitung 22 in die äußere Wärmequelle, wo es erhitzt wird. Anschließend wird es jedoch nicht durch das Wärmespeichersystem geleitet, sondern verlässt die Anlage über die Leitungen 26, 27 und 25, wobei die Sperrventile 33, 34 und 35 geschlossen sind. Außerhalb der dargestellten Anlage wird die vom Fluid mitgeführte Wärme in nutzbare Energie, z.B. in Dampfturbinen in elektrischen Strom, umgewandelt.

Im zweiten Betriebsmodus des erfindungsgemäßen Wärmespeichersystems, d.h. der Entladung, fließt das Wärmeübertragungsmedium, das in diesem Fall als Wärme-transportmedium dient, d.h. ein kaltes Fluid, über Leitung 21, Ventil 31 und Leitung 28 in den Verteiler 16, wo es auf das Leitungsbündel 8,9 (in diesem Fall 9) aufgeteilt wird und so den Wirbelschicht-Wärmeaustauscher passiert, worin es Wärme vom heißen Sand aufnimmt. Das Leitungsbündel wird im Sammler 17 wieder zu einer Leitung 29 zusammengeführt, über die sowie über Ventil 34 und die Leitungen 27 und 25 das nun heiße Fluid die dargestellte Anlage verlässt und erneut die aufgenommene Wärme in nutzbare Energie umwandelt. Die Sperrventile 33 und 35 sind in diesem Fall geschlossen.

Ein zweites Beispiel ist der Einsatz des Wärmespeichersystems zur kontinuierlichen Nutzung eines pulsierend, d.h. diskontinuierlich, anfallenden heißen Abgases aus einem industriellen Prozess, z.B. einem Industrieofen.

In diesem Anwendungsfall wird beim "Beladen" des Speichersystems mit Wärme das heiße Abgas als Fluidisierungsmedium und Wärmequelle eingesetzt. In der "Entlade"-Phase wird mit Hilfe der mechanischen Fördereinrichtungen und der höhenverstellbaren Wehre der Feststoffmassenstrom umgekehrt, und die Fluidisierung erfolgt nun beispielsweise mit kaltem Abgas, einem Gemisch aus Abgas und Frischluft oder ausschließlich mit Frischluft.

Durch die Leitungen 8,9 des Wirbelschicht-Wärmeaustauschers wird sowohl während des Beladens als auch während des Entladens, d.h. ohne Strömungsumkehr, ein Wärmetransportmedium geleitet, dass nun kontinuierlich Wärme aus dem Wärmespeichersystem der Erfindung entziehen kann. Beim Beladen des Sandes mit Wärme nimmt das Wärmetransportmedium die Wärme vorwiegend direkt vom heißen Abgas auf, während es die Wärme beim Entladen dem Feststoffinventar im Wirbelschicht-Wärmeaustauscher entzieht.

Die vorliegende Erfindung stellt somit ein Wärmespeichersystem bereit, das für vielerlei Zwecke einsetzbar ist und eine deutlich wirtschaftlichere Form der Wärmespeicherung in Sand ermöglicht, als dies nach dem Stand der Technik möglich war.

## Patentansprüche

1. Wärmespeichersystem unter Verwendung von Sand als festes Wärmespeichermedium, wobei das System folgende Komponenten umfasst:
- einen Speicherbehälter (1) für kalten Sand;
- einen Speicherbehälter (2) für heißen Sand;
- einen dazwischen angeordneten Wirbelschicht-Wärmeaustauscher (3), der durch Wehre (4, 5) von den Speicherbehältern (1, 2) getrennt ist und durch Wehre (6) in eine Vielzahl von Kammern (7) unterteilt ist,
wobei die Wehre (4, 5, 6) als Kombination aus Überlauf- und Unterlaufwehren ausgebildet sind;
wobei in den Kammern (7) des Wärmeaustauschers (3) Mittel (8) zum Übertragen von Wärme von einer Wärmequelle auf den darin fluidisierten Sand sowie Mittel (9) zum Übertragen von Wärme vom darin fluidisierten Sand auf ein Wärmetransportmedium vorgesehen sind; und
- zumindest ein unterhalb des Wärmeaustauschers (3) angeordnetes Gebläse (14) zur Fluidisierung des Sands.

2. Wärmespeichersystem nach Anspruch 1, **dadurch gekennzeichnet, dass** die Wehre (4, 5, 6) zumindest teilweise und unabhängig voneinander höhenverstellbar sind.

3. Wärmespeichersystem nach Anspruch 1 oder 2, **dadurch gekennzeichnet, dass** das Gebläse durch Einblasen von heißer Luft oder eines Abgases als Fluidisierungsmedium und Wärmequelle gleichzeitig als Mittel (8) zum Übertragen von Wärme auf den Sand dient.

4. Wärmespeichersystem nach Anspruch 1 oder 2, **dadurch gekennzeichnet, dass** die Mittel (8) zum Übertragen von Wärme auf den Sand eine oder mehrere Leitungen zum Hindurchleiten eines als Wärmequelle dienenden heißen Fluids durch den Wärmeaustauscher (3) sind.

5. Wärmespeichersystem nach einem der vorangegangenen Ansprüche, **dadurch gekennzeichnet, dass** die Mittel (9) zum Übertragen von Wärme vom Sand auf ein Wärmetransportmedium eine oder mehrere Leitungen zum Hindurchleiten eines als Wärmetransportmedium dienenden kalten Fluids durch den Wärmeaustauscher (3) sind.

6. Wärmespeichersystem nach einem der vorangegangenen Ansprüche, **dadurch gekennzeichnet, dass** in den Sandspeicherbehältern (1, 2) Mittel (10, 13) zum Austragen von Sand daraus vorgesehen sind.

7. Wärmespeichersystem nach Anspruch 6, **dadurch gekennzeichnet, dass** die Mittel (10, 13) zum Austragen von Sand aus Schnecken-, Band- und Becherförderern sowie Fluidisierungsgebläsen ausgewählt sind.

8. Wärmespeichersystem nach einem der vorangegangenen Ansprüche, **dadurch gekennzeichnet, dass** oberhalb des Wirbelschicht-Wärmeaustauschers (3) ein oder mehrere rekuperative Gas-Wärmeaustauscher (11) zur Gewinnung von Wärme aus dem Fluidisierungsmedium vorgesehen sind.

9. Wärmespeichersystem nach einem der vorangegangenen Ansprüche, **dadurch gekennzeichnet, dass** - in Strömungsrichtung des Fluidisierungsmediums gesehen - nach dem Wirbelschicht-Wärmeaustauscher (3) Mittel zum Auffangen und Rezyklieren des Fluidisierungsmediums vorgesehen sind.

10. Wärmespeichersystem nach einem der vorangegangenen Ansprüche, **dadurch gekennzeichnet, dass** in einer oder mehreren der Kammern (7) Mittel (12) zum Umlenken des Sandes in horizontaler Richtung vorgesehen sind.

11. Verwendung eines Wärmespeichersystems nach einem der Ansprüche 1 bis 10 zur Speicherung von in einem Kraftwerk erzeugter Wärme.

12. Verwendung nach Anspruch 11, **dadurch gekennzeichnet, dass** die einem Kraftwerk zur Erzeugung von Alternativenergie erzeugte Wärme gespeichert wird.

13. Verwendung nach Anspruch 12, **dadurch gekennzeichnet, dass** die einem Solarkraftwerk erzeugte Wärme gespeichert wird.

14. Verwendung eines Wärmespeichersystems nach einem der Ansprüche 1 bis 10 zur Speicherung von Industrieabwärme.

15. Verwendung eines Wärmespeichersystems nach einem der Ansprüche 1 bis 10 zur Speicherung von bei der Speicherung von elektrischer Energie anfallender Abwärme.

## Claims

1. A heat storage system using sand as a solid heat storage medium, the system comprising the following components:
- a storage tank (1) for cold sand;
- a storage tank (2) for hot sand;
- a fluidized bed heat exchanger (3) arranged therebetween, which is separated from the storage tanks (1, 2) by weirs (4, 5) and divided into a plurality of chambers (7) by weirs (6),
wherein the weirs (4, 5, 6) are arranged as a combination of overflow and underflow weirs;
wherein, in the chambers (7) of the heat exchanger (3), means (8) for transferring heat from a heat source to the sand fluidized therein as well as means (9) for transferring heat from the sand fluidized therein to a heat transport medium are provided; and
- at least one blower (14) positioned underneath the heat exchanger (3) for fluidizing the sand.

2. The heat storage system according to claim 1, **characterized in that** at least some of the weirs (4, 5, 6) are vertically adjustable independently of each other.

3. The heat storage system according to claim 1 or 2, **characterized in that** the blower simultaneously serves as a means (8) for transferring heat to the sand by blowing in hot air or an exhaust gas as a fluidizing medium and heat source.

4. The heat storage system according to claim 1 or 2, **characterized in that** the means (8) for transferring heat to the sand consists in one or more ducts for transporting a hot fluid serving as a heat source through the heat exchanger (3).

5. The heat storage system according to any one of the preceding claims, **characterized in that** the means (9) for transferring heat from the sand to a heat transport medium consists in one or more ducts for transporting a cold fluid serving as a heat transport medium through the heat exchanger (3).

6. The heat storage system according to any one of the preceding claims, **characterized in that**, in the sand storage tanks (1, 2), means (10, 13) for discharging sand therefrom are provided.

7. The heat storage system according to claim 6, **characterized in that** the means (10, 13) for discharging sand are selected from screw, band and bucket conveying and/or hoisting devices as well as fluidizing blowers.

8. The heat storage system according to any one of the preceding claims, **characterized in that** one or more recuperative gas-heat exchangers (11) are provided above the fluidized bed heat exchanger (3) for recovering heat from the fluidizing medium.

9. The heat storage system according to any one of the preceding claims, **characterized in that** means for collecting and recycling the fluidizing medium are provided downstream of the fluidized bed heat exchanger (3), as seen in the flow direction of the fluidizing medium.

10. The heat storage system according to any one of the preceding claims, **characterized in that** means (12) for redirecting the sand in a horizontal direction are provided in one or more of the chambers (7).

11. Use of a heat storage system according to any one of the claims 1 to 10 for storing heat produced in a power plant.

12. The use according to claim 11, **characterized in that** heat produced in a power plant for generating alternative energy is stored.

13. The use according to claim 12, **characterized in that** heat produced in a solar power plant is stored.

14. Use of a heat storage system according to any one of the claims 1 to 10 for storing industrial waste heat.

15. Use of a heat storage system according to any one of the claims 1 to 10 for storing waste heat generated when storing electric energy.

## Revendications

1. Système d'accumulation thermique utilisant un médium d'accumulation thermique solide, ledit système comprenant les composants suivants:
- un réservoir (1) de sable froid;
- un réservoir (2) de sable chaud;
- un échangeur thermique à lit fluidisé (3) arrangé entre les deux, séparé desdits réservoirs (1, 2) par des déversoirs (4, 5) et subdivisé en un grand nombre de chambres (7) par des déversoirs (6),
les déversoirs (4, 5, 6) étant arranges comme une combinaison de déversoirs à débordement et de déversoirs à courant de fond ;
des moyens (8) pour le transfert de chaleur d'une source de chaleur au sable fluidisé ainsi que des moyens (9) pour le transfert de chaleur du sable fluidisé à un médium de transport de chaleur étant disposés dans les chambres (7) de l'échangeur thermique (3) ; et
- au moins une soufflante (14) positionnée au-dessous de l'échangeur thermique (3) pour fluidiser le sable.

2. Système d'accumulation thermique selon la revendication 1, **caractérisé en ce qu'**au moins quelques-uns des déversoirs (4, 5, 6) sont verticalement réglables indépendamment les uns des autres.

3. Système d'accumulation thermique selon la revendication 1 ou 2, **caractérisé en ce que** ladite soufflante à la même temps sert de moyen (8) pour le transfert de chaleur au sable en insufflant de l'air chaud ou un gaz d'échappement comme médium de fluidification et source de chaleur.

4. Système d'accumulation thermique selon la revendication 1 ou 2, **caractérisé en ce que** les moyens (8) pour le transfert de chaleur au sable consiste en une ou plusieurs conduites pour le transport d'un fluide chaud qui sert de source de chaleur à travers de l'échangeur thermique (3).

5. Système d'accumulation thermique selon une des revendications précédentes, **caractérisé en ce que** les moyens (9) pour le transfert de chaleur du sable à un médium de transport de chaleur consistent en une ou plusieurs conduits pour le transport d'un fluide froid qui sert de médium de transport de chaleur à travers l'échangeur thermique (3).

6. Système d'accumulation thermique selon une des revendications précédentes, **caractérisé en ce que** des moyens (10, 13) pour déverser du sable des réservoirs de sable (1,2) sont prévus.

7. Système d'accumulation thermique selon la revendication 6, **caractérisé en ce que** les moyens (10, 13) pour déverser le sable sont sélectionnés des dispositifs transporteurs à vis, à courroie et à godets et des soufflantes de fluidification.

8. Système d'accumulation thermique selon une des revendications précédentes, **caractérisé en ce qu'**un ou plusieurs échangeurs thermiques à gaz (11) de récupération sont prévus au-dessus l'échangeur thermique à lit fluidisé (3) pour récupérer de la chaleur du médium de fluidification.

9. Système d'accumulation thermique selon une des revendications précédentes, **caractérisé en ce que** des moyens pour capter et recycler le médium de fluidification sont prévus en aval de l'échangeur thermique à lit fluidisé (3) dans le sens d'écoulement du médium de fluidification.

10. Système d'accumulation thermique selon une des revendications précédentes, **caractérisé en ce que** des moyens (12) pour diriger le sable dans une direction horizontale sont prévus dans une ou plusieurs chambres (7).

11. Utilisation d'un système d'accumulation thermique selon une des revendications 1 à 10 pour accumuler de la chaleur produite dans une centrale électrique.

12. Utilisation selon la revendication 11, **caractérisé en ce que** la chaleur produite dans une centrale électrique pour la génération d'énergie alternative est accumulée.

13. Utilisation selon la revendication 12, **caractérisé en ce que** la chaleur produite dans une centrale solaire est accumulée.

14. Utilisation d'un système d'accumulation thermique selon une des revendications 1 à 10 pour accumuler de la chaleur dissipée de l'industrie.

15. Utilisation d'un système d'accumulation thermique selon une des revendications 1 à 10 pour accumuler de la chaleur dissipée produite au cours de l'accumulation d'énergie électrique.
